# EUROPÄISCHE PATENTSCHRIFT

(11) **EP 0 472 173 B1**
(45) Veröffentlichungstag und Bekanntmachung des Hinweises auf die Patenterteilung: **26.04.1995**
(21) Anmeldenummer: 91113960.8
(22) Anmeldetag: 21.08.1991
(51) Int. Cl.: B09B 1/00, B03B 9/06

(54) **Verfahren zum Aufbereiten von Deponiekörpermaterial, insbesondere Altlasten**
Method for treating waste dump material, more particularly old waste dumps
Procédé de traitement des matières d'une décharge, notamment de décharges anciennes

(30) Priorität: 23.08.1990 DE 4026610; 17.08.1991 DE 4127297
(43) Veröffentlichungstag der Anmeldung: 26.02.1992
(73) Patentinhaber: Kahle, Hans Joachim, Dr., D-26127 Oldenburg (DE)
(72) Erfinder: Kahle, Hans Joachim, Dr., D-26127 Oldenburg (DE)
(74) Vertreter: Jabbusch, Wolfgang, Dr.Jur. Jabbusch, Wehser & Lauerwald Patentanwälte

(56) Entgegenhaltungen:
- AT-B- 391 636
- BE-A- 891 875
- DE-A- 3 543 098
- FR-A- 2 339 434
- FR-A- 2 593 724

## Beschreibung

Die Erfindung betrifft ein Verfahren zum Aufbereiten von Deponiekörpermaterial, insbesondere Altlasten und Altablagerungen.

Die AT-B-391 636 beschreibt ein Verfahren zur Sanierung von Altlast-Abfalldeponien, wobei das Deponiegut in mehrere Klassen getrennt wird und diese auschließend in neu errichtete, dichte Deponieräume eingelagert werden.

Hier in Rede stehende Deponiekörper sind Anhäufungen von Müll, die bei der Müllentsorgung auf Deponien entstehen. Der Deponiekörper stellt einen extrem heterogen zusammengesetzten Festbettreaktor dar, von dem aufgrund seines ungesteuerten chemischen Reaktionsverhaltens Umweltgefährdungen durch Gase, Sickerwasser, Schadstoffe usw. ausgehen. Zunehmende Deponieflächenverknappung verschärft das Problem der Müllentsorgung. Der Freiflächenverbrauch zur Neueinrichtung sowie zur Erweiterung von Mülldeponien stellt eines der akuten Müllnotstandsprobleme dar.

Der Erfindung liegt die Aufgabe zugrunde, ein Verfahren zu finden, mit dem sich Deponiekörpermaterial, vorzugsweise aus Altablagerungen stillgelegter oder Altablagerungsbereichen noch betriebener Hausmülldeponien aufarbeiten läßt, um die ursprüngliche Ausdehnung der Deponie nachträglich zu verkleinern und dadurch nutzbare Flächen zu gewinnen.

Diese Aufgabe ist erfindungsgemäß dadurch gelöst, daß der Deponie die abgelagerten Stoffe fortlaufend entnommen werden, daß die entnommenen Stoffe einer Abscheidung in Grobstoff und Feinstoff unterworfen werden, daß der Feinstoff in wenigstens ein Behältnis gegeben und darin mit Wasser konfrontiert wird, daß aus dem ersten Behältnis die Sinkstoffe abgezogen und einer Nachsortierung zum Erhalten einer reinen Inertstofffraktion unterzogen werden, daß die Flüssigkeit aus dem ersten Behältnis fortlaufend entnommen und in wenigstens ein zweites Behältnis eingegeben wird, daß ein Teil der im zweiten Behältnis sich absetzenden Biomasse abgezogen und in das erste Behältnis zurückgeleitet wird, daß der Biomasseüberschuß aus dem zweiten Behältnis abgezogen und einer anaeroben Zersetzung zur Gewinnung von Biogas unterworfen wird, daß eine nach der anaeroben Zersetzung anfallende Biotrockenmasse und das Biogas zur Wärmegewinnung verwendet werden, daß aus dem Grobstoff Störstoffe wie Metalle und Kunststoffe entfernt werden und daß die danach verbleibenden brennbaren Grobstoffe zur Wärmegewinnung verwendet werden und daß die bei der Wärmegewinnung aus Grobstoff und Biotrockenmasse anfallende Asche der Deponie wieder zugeführt wird.

Weitere vorteilhafte Ausgestaltungen des erfindungsgemäßen Verfahrens ergeben sich aus den Merkmalen der Unteransprüche.

Das erfindungsgemäße Verfahren führt zur Fraktionierung des Deponiekörpermaterials in Brennstoffe, Inertstoffe und Störstoffe einerseits sowie biologisch abbaubarer Feinstoffe andererseits.

Die Brennstoffe können unter Wärmegewinnung zu Asche verbrannt werden, welche erneut in einer Deponie abgelagert werden kann, jedoch mit wesentlich geringerem Flächenbedarf.

Inertstoffe, wie Keramik, Glas und dergleichen, lassen sich ebenfalls, soweit eine Wiederverwertung nicht möglich ist, zumindest zerkleinern und zusammen mit der Asche ablagern.

Störstoffe, wie Metall, Kunststoffe und dergleichen, können mit Vorteil einer Wiederverwertung zugeführt werden.

Für die Entnahme der in der Deponie abgelagerten Stoffe sowie deren Sortierung in Grobstoff und Feinstoff sind bevorzugt mechanische Einrichtungen geeignet.

Die eigentliche Aufbereitung des Deponiekörpermaterials nutzt eine Schwimmsortierung, bei der auch gleichzeitg eine biologische Zersetzung und Umwandlung in Biomasse erfolgt, die entsprechend verwertet werden kann.

Die Verfeuerung der aus dem Deponiekörpermaterial gewonnenen brennbaren Fraktionen und auch des z.B. aus der Ausfaulung der Biomasse gewonnenen Biogases erfolgt vorzugsweise in einem Blockkraftwerk, mit dem Vorteil, daß die für den Prozeßablauf benötigte Energie zum größten Teil vom Kraftwerk geliefert werden kann, um z.B. Pumpen, Fördervorrichtungen, Siebe, Abscheider, Rührwerke und dergleichen zur Durchführung des Verfahrens eingesetzte Einrichtungen zu betreiben. Selbstverständlich kann eine Verfeuerung auch zu anderen Zwecken erfolgen. Besonders vorteilhaft ist es, die gewonnenen Brennstoffe für eine Erzeugung einer Stützfeuerung bei der Verbrennung von z.B. nicht oder nur schwer brennbarem Sondermüll zu verwenden.

Das in den Behältnissen, z.B. Becken, Mischtrommeln oder dergleichen, enthaltende Wasser ist vorzugsweise ein Brauchwasser, z.B. Auslaufwasser von Kläranlagen, Kühlwasser oder dergleichen, das möglichst salzarm und mit Schmutzstoffen hoch beladbar ist. Dabei wird innerhalb des Verfahrens zumindest ein Teilkreislauf erzeugt, indem aus einem der zweiten Behältnisse ablaufende Flüssigkeit einem ersten Behältnis wieder zugeführt wird. Die aus einem der zweiten Behältnisse ablaufende Flüssigkeit kann auch direkt der abzutragenden Deponie zugeführt werden. Zusammen mit abgetragenem Deponiematerial wird die Flüssigkeit dann dem Verfahren wieder zugeführt.

Mit besonderem Vorteil ist es möglich, das mit Schadstoffen belastete Sickerwasser einer Deponie zu sammeln bzw. aufzufangen und mit Brauchwasser so zu mischen, daß die in der Mischung enthaltene Schadstoffkonzentration deren Abbau, z.B. biologischen Abbau, ermöglicht bzw. nicht zum Absterben sich bildender Biomasse führt.

Während des Ablaufs des Verfahrens erfolgt eine Anreicherung von Salzen, z.B. Nitraten, Phosphaten, Chloriden usw. in der Flüssigkeit, die beispielsweise aus dem Deponiekörpermaterial ausgewaschen werden können, so daß die Salzkonzentration allmählich immer mehr zunimmt. Die Salzkonzentration in der Flüssigkeit kann zum Absterben der Biomasse führen. Um dies zu vermeiden, wird die Flüssigkeit vor der Einleitung in das erste Behältnis oder Zuführung zur Deponie einer Entsalzung unterworfen.

Die im ersten Behältnis anfallenden Schwimmstoffe können einer Zersetzung durch Mikroben ausgesetzt werden. Um die Mikroben-Verfügbarkeit zu verbessern, können die Schwimmstoffe zerkleinert werden.

Die aus dem ersten Becken anfallenden Schwimmstoffe können jedoch auch direkt einr Verwendung zur Wärmeerzeugung, z.B. einer Verbrennung, zugeführt werden.

Eine Deponie abzutragen und den Abtrag in biologisch abbaubare und nicht abbaubare Bestandteile zu separieren, ist erfindungswesentlich, wobei ebenfalls von Bedeutung ist, daß der biologische Abbau zunächst aerob erfolgt und der dabei entstehende Überschuß an Biomasse schließlich anaerob zersetzt wird.

Parallel dazu wird durch die Erfindung auch die Entsorgung der nicht biologisch abbaubaren und zersetzbaren Bestandteile ermöglicht.

Eine nach dem erfindungsgemäßen Verfahren aufgearbeitete Deponie benötigt nach der Aufarbeitung nur noch eine wesentlich verringerte Fläche zur Ablagerung von nicht brennbaren und nicht wiederverwertbaren Stoffen, die in der ursprünglichen Deponie bereits enthalten waren. Die freigesetzte nunmehr nutzbare Fläche kann entweder erneut als Deponie genutzt werden oder für andere Zwecke zur Verfügung stehen. Deponien können auch vollständig beseitigt werden, indem nach der Aufarbeitung mehrerer Deponien nur noch eine sämtliches Restmaterial aller Deponien aufnehmende kleinere Deponie angelegt wird, oder das Restmaterial auf einer noch in Betrieb befindlichen Deponie abgelagert wird.

## Patentansprüche

1. Verfahren zum Aufbereiten von Deponiekörpermaterial, insbesondere Altlasten und Altablagerungen,
wobei
a) der Deponie die abgelagerten Stoffe fortlaufend entnommen werden,
b) die entnommenen Stoffe einer Abscheidung in Grobstoff und Feinstoff unterworfen werden,
c) der Feinstoff in wenigstens ein erstes Behältnis gegeben und darin mit Wasser konfrontiert wird,
d) aus dem ersten Behältnis die Sinkstoffe abgezogen und einer Nachsortierung zum Erhalten einer reinen Inertstofffraktion unterzogen werden,
e) die Flüssigkeit aus dem ersten Behältnis fortlaufend entnommen und in wenigstens ein zweites Behältnis eingegeben wird,
f) ein Teil einer im zweiten Behältnis sich absetzenden Biomasse abgezogen und in das erste Behältnis zurückgeleitet wird,
g) der Biomasseüberschuß aus dem zweiten Behältnis abgezogen und einer anaeroben Zersetzung zur Gewinnung von Biogas unterworfen wird,
h) die nach der anaeroben Zersetzung anfallende Biotrockenmasse und das Biogas zur Wärmegewinnung verwendet werden,
i) aus dem Grobstoff Störstoffe wie Metalle und Kunststoffe entfernt werden und daß die danach verbleibenden brennbaren Grobstoffe zur Wärmegewinnung verwendet werden und
j) die bei der Wärmegewinnung aus Grobstoff und Biotrockenmasse anfallende Asche der Deponie wieder zugeführt wird.

2. Verfahren nach Anspruch 1, dadurch gekennzeichnet, daß das dem ersten Behältnis zugeführte Wasser aus gesammeltem Sickerwasser der Deponie und Brauchwasser gemischt wird.

3. Verfahren nach den Ansprüchen 1 oder 2, dadurch gekennzeichnet, daß die Störstoffe und die bei Nachsortierung der Sinkstoffe anfallenden Nicht-Inertstofffraktionen einer Wiederverwertung zugeführt werden.

4. Verfahren nach den Ansprüchen 1 oder 2, dadurch gekennzeichnet, daß die Störstoffe und die bei Nachsortierung der Sinkstoffe anfallenden Nicht-Inertstofffraktionen der Deponie wieder zugeführt und mit der Asche abgelagert werden.

5. Verfahren nach einem der Ansprüche 1 bis 4, dadurch gekennzeichnet, daß die aus dem zweiten Behältnis ablaufende Flüssigkeit dem ersten Behältnis wieder zugeführt wird.

6. Verfahren nach einem der Ansprüche 1 bis 4, dadurch gekennzeichnet, daß die aus dem zweiten Behältnis ablaufende Flüssigkeit der Deponie zugeführt wird.

7. Verfahren nach einem der Ansprüche 5 und 6, dadurch gekennzeichnet, daß die Flüssigkeit vor der Einleitung in das erste Behältnis entsalzt wird.

8. Verfahren nach einem der Ansprüche 1 bis 7, dadurch gekennzeichnet, daß dem ersten Behältnis zwecks Ausgleich des prozeßbedingten Wasserverlustes Brauchwasser in entsprechender Menge zugesetzt wird.

9. Verfahren nach einem der vorhergehenden Ansprüche, dadurch gekennzeichnet, daß dem ersten Behältnis zwecks Ausgleich eines möglichen Nährstoffdefizites entsprechende mikrobenverfügbare Bestandteile von Frischmüll zugesetzt werden.

10. Verfahren nach einem der Ansprüche 1 bis 8, dadurch gekennzeichnet, daß eine im ersten Behältnis anfallende Schwimmstofffraktion zwecks Verbesserung der Mikrobenverfügbarkeit zerkleinert wird.

11. Verfahren nach Anspruch 10, dadurch gekennzeichnet, daß die Schwimmstofffraktion aus dem ersten Behältnis abgezogen und zur Wärmegewinnung verwendet wird.

12. Verfahren nach einem der Ansprüche 10 und 11, dadurch gekennzeichnet, daß die im ersten Behältnis anfallende Schwimmstofffraktion zerkleinert und in das zweite Behältnis gegeben wird.

## Claims

1. A method for treating waste dump material, more particularly disused dumps and old deposits, wherein
a) the deposited materials are continuously removed from the dump,
b) the removed materials are subjected to separation into coarse material and fine material,
c) the fine material is fed into at least a first vessel and in the said vessel is brought into contact with water,
d) the sediments are removed from the first vessel and are subjected to re-grading in order to obtain a pure inert material fraction,
e) the fluid is continuously removed from the first vessel and fed into at least a second vessel,
f) a part of a biomass settling in the second vessel is drawn off and fed back into the first vessel,
g) the biomass surplus is removed from the second vessel and subjected to anaerobic decomposition in order to produce biogas,
h) the dried biomass accumulating after the anaerobic decomposition and the biogas are used to produce heat,
i) troublesome materials such as metals and plastics are removed from the coarse material and the combustible coarse materials then left behind are used to produce heat, and
j) the ash accumulating during the heat production process from the coarse material and the dried biomass is fed to the waste dump again.

2. A method according to claim 1, characterized in that the water supplied to the first vessel is a mixture of the collected seepage water from the waste dump and industrial water.

3. A method according to claims 1 or 2, characterized in that the troublesome materials and the non-inert material fractions accumulating when the sediments are re-graded are supplied to a recyling plant.

4. A method according to claims 1 or 2, characterized in that the troublesome materials and the non-inert material fractions accumulating when the sediments are re-graded are supplied to the waste dump again and deposited with the ash.

5. A method according to one of claims 1 to 4, characterized in that the fluid running out of the second vessel is fed to the first vessel again.

6. A method according to one of claims 1 to 4, characterized in that the fluid running out of the second vessel is fed to the waste dump.

7. A method according to one of claims 5 and 6, characterized in that the fluid is desalinated before being introduced into the first vessel.

8. A method according to one of claims 1 to 7, characterized in that industrial water is added in an appropriate quantity to the first vessel to compensate for the water loss caused by the process.

9. A method according to one of the preceding claims, characterized in that appropriate substances of fresh refuse capable of providing microbes are added to the first vessel in order to compensate for a possible nutrient deficit.

10. A method according to one of claims 1 to 8, characterized in that a floating matter fraction accumulating in the first vessel is comminuted in order to improve the microbe availability.

11. A method according to claim 10, characterized in that the floating matter fraction is removed from the first vessel and used to obtain heat.

12. A method according to one of claims 10 and 11, characterized in that the floating matter fraction accumulating in the first vessel is comminuted and fed into the second vessel.

## Revendications

1. Procédé de traitement des matières de décharge, notamment d'une ancienne décharge, selon lequel,
a) les matières entreposées dans la décharge sont prélevées de manière continuelle ;
b) les matières prélevées sont soumises à un triage en matières grossières et matières fines ;
c) les matières fines sont transférées dans un premier récipient et confrontées avec de l'eau dans ce dernier ;
d) les matières qui se déposent dans le premier récipient sont prélevées et soumises à un triage secondaire pour obtenir une fraction de substance purement inerte ;
e) le liquide est prélevé de façon continue du premier récipient et transféré à au moins un deuxième récipient ;
f) une partie d'une masse biologique déposée dans un deuxième récipient est prélevée et recyclée dans le premier récipient ;
g) la quantité excédentaire de la masse biologique du deuxième récipient est prélevée et soumise à une décomposition anaérobe pour obtenir du gaz biologique ;
h) la masse sèche biologique produite après la décomposition anaérobe et le gaz biologique sont utilisés pour produire de la chaleur ;
i) les matières gênantes, telles que métaux et matières plastiques, sont éliminées dans les matières grossières ; et les matières grossières restantes et combustibles sont réutilisées pour produire de la chaleur ; et
j) les cendres produites par la combustion des matières grossières et de la masse sèche biologique sont retournées à la décharge.

2. Procédé selon la revendication 1, caractérisé en ce que l'eau introduite dans le premier récipient est un mélange d'eau d'infiltration recueillie de la décharge et d'eau industrielle.

3. Procédé selon la revendication 1 ou 2, caractérisé en ce que les matières gênantes et les fractions de matières non inertes produites lors du triage secondaire des substances déposées sont recyclées pour une utilisation ultérieure.

4. Procédé selon la revendication 1 ou 2, caractérisé en ce que les matières gênantes et les fractions de matières non inertes produites lors du triage secondaire des substances déposées sont recyclées à la décharge et déposées avec les cendres.

5. Procédé selon l'une quelconque des revendications 1 à 4, caractérisé en ce que le liquide sortant du deuxième récipient est retourné dans le premier récipient.

6. Procédé selon l'une quelconque des revendications 1 à 4, caractérisé en ce que le liquide sortant du deuxième récipient est renvoyé à la décharge.

7. Procédé selon la revendication 5 ou 6, caractérisé en ce que le liquide est dessalé avant son retour dans le premier récipient.

8. Procédé selon l'une quelconque des revendications 1 à 7, caractérisé en ce qu'une quantité appropriée d'eau industrielle est introduite dans le premier récipient pour compenser la perte d'eau due au processus.

9. Procédé selon l'une quelconque des revendications précédentes, caractérisé en ce que des composants de déchets frais disposant d'une quantité appropriée de microbes sont introduits dans le premier récipient pour compenser un éventuel déficit de substances nutritives.

10. Procédé selon l'une quelconque des revendications 1 à 8, caractérisé en ce qu'une fraction de matières flottantes produites dans le premier récipient est broyée pour améliorer la disponibilité de microbes.

11. Procédé selon la revendication 10, caractérisé en ce que la fraction de matières flottantes est prélevée du premier récipient et réutilisée pour produire de la chaleur.

12. Procédé selon la revendication 10 ou 11, caractérisé en ce que la fraction de substances flottantes produite dans le premier récipient est broyée et introduite dans le deuxième récipient.
